# EUROPEAN PATENT APPLICATION

(11) **EP 1 587 279 A2**
(43) Date of publication of application: **19.10.2005**
(21) Application number: 05252379.2
(22) Date of filing: 15.04.2005
(51) Int. Cl.: H04L 29/06

(54) **Method and apparatus for a large scale distributed multimedia streaming system and its media content distribution**

(30) Priority: 16.04.2004 US 826519
(71) Applicant: UTStarcom, Inc., Alameda, CA 94502 (US)
(72) Inventor: Li, Qiang, Campbell, CA 95008 (US); Zhang, Greg, Cupertino, CA 95014 (US); Ding, Niu, Santa Clara, CA 95050 (US)
(74) Representative: Freeman, Jacqueline Carol

(57) **Abstract**

A media content distribution system for distributed multimedia streaming communicates over a network and incorporates multiple independent media stations, each having a media director for control and a number of media engines for storage, retrieval and streaming of media content. A content request from a media console connected to the network is redirected by the media director to a selected one of the media engines storing content corresponding to the request for streaming. The system includes at least one distribution center providing media content downloading capability and a media location registry communicating with the media director in each media station. The media location registry stores the location of all media content in the media stations.

## Description

### FIELD OF THE INVENTION

This invention relates generally to the field of distributed multimedia streaming and more particularly to media content distribution for high bit rate streaming from distributed components

### BACKGROUND OF THE INVENTION

High bit rate multimedia streaming, particularly high bit rate video streaming has evolved from handling thousands of simultaneous subscriber to millions of subscribers. The conventional system architecture based on a single powerful machine or a cluster system with central control can no longer meet the massive demands.

### SUMMARY OF THE INVENTION

A media content distribution system for distributed multimedia streaming, may communicate over a network and incorporate multiple independent media stations, each of which may have a media director and a number of media engines. Each media engine may include storage for media content, and/or retrieval systems to obtain media content over the network and/or interconnection for streaming media content over the network. The media director may control the media station and may be employed for directing retrieval over the network of media content for example by a selected media engine and/or tracking content stored on the media engines. A content request from a media console connected to the network may be redirected by the media director to a selected one of the media engines storing content corresponding to the request for streaming.

At least one distribution center communicating over the network may be provided and may include media content downloading capability and/or a media location registry which may communicate with the media director in each media station. The media location registry may store the location of all media content in the media stations.

### BRIEF DESCRIPTION OF THE DRAWINGS

These and other features and advantages of the present invention will be better understood by reference to the following detailed description when considered in connection with the accompanying drawings wherein:
FIG. 1 is a block diagram of the layer architecture of a media switch system employing the invention;
FIG. 2 is a block diagram of the hardware elements for implementing the layers of FIG. 1;
FIG. 3 is a block diagram of the logical hierarchy for content distribution in a system employing the invention;
FIG. 4 is a block diagram of the elements incorporated in a media station;
FIG. 5 is a flow diagram demonstrating the distribution of content to the media stations;
FIG. 6 is a diagram of the hardware interaction and process for pushing content to the media stations;
FIG. 7 is a diagram of the hardware interaction and process for transfer of content resulting from a subscriber request;
FIG. 8a is a diagram of the hardware interaction and process for streaming data to a subscriber's media console;
FIG. 8b is a flow diagram of the process for streaming data as shown in FIG. 5a;
FIG. 9 is a flow diagram of the process for rapid replication of segments on alternative media engines to relieve overload;
FIG. 10 is a flow diagram of the process for media engine swapping for avoiding errors in response to subscriber commands;
FIG. 11 is a flow diagram of the process for deletion of programs from the media stations;
FIG. 12 is a block diagram of the high level data flow for the integrated media switch incorporating the invention;
FIG. 13 is a top level block diagram of the hardware physical structure;
FIG. 14 is a detailed block diagram of the chassis arrangement;
FIG. 15 is a block diagram of the functional interaction of the blade main board with the Network Management System and the chassis blade controller;
FIG. 16 is a block diagram of the basic elements of the secret key system for access control in a system employing the invention; and
FIG. 17 is a block diagram of the system communication for authentication of a media console request for streaming data.

### DETAILED DESCRIPTION OF THE INVENTION

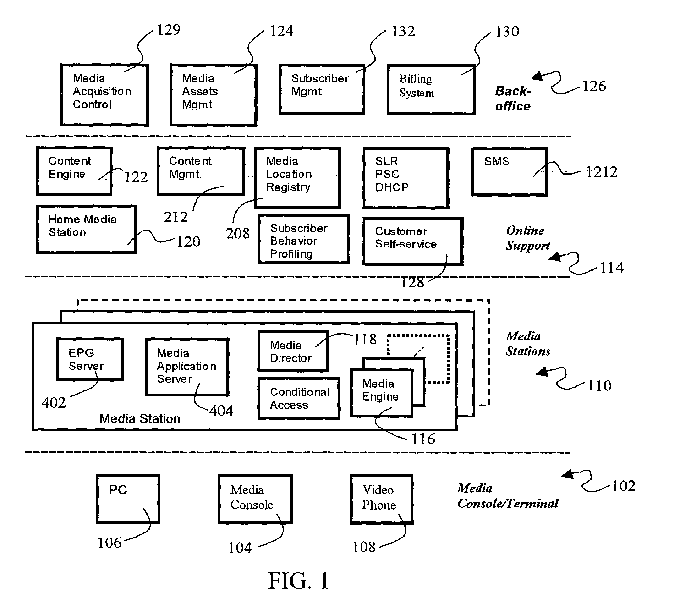

A media content distribution system incorporating the present invention employs two tiers, a media station that covers a district, and the media switch, consisting of a number of media stations, that covers a metropolitan area or several metropolitan areas. FIG. 1 is an architectural overview showing the layers in which the system operates. Beginning with the media console/terminal layer 102, media consoles 104 or terminals are the end devices for media streaming operations and provide content to the subscriber. A typical device has an Electronic Program Guide (EPG) agent which displays the program guide, a decoder decoding compressed streaming data such as MPEG-2, MPEG-4, and Microsoft Windows Media Series 9, a Media Player which interacts with streaming servers to control the program selection, trick-mode operation ("VCR like" operations such as fast forward, pause and rewind), and data flow. In the case of Media Console, a TV encoder is built in to convert the streaming data into TV signals. In many applications a personal computer 106 and a video phone 108 will be attached to the network at the subscriber level.

The media station layer 110 provides multiple media stations for data streaming. A Media Station 112 is a self-sufficient streaming unit communicating with a set of subscribers having media consoles/terminals. Media Stations are typically installed in a Central Office (CO) in a broadband network. The placement of Media Stations is determined according to the number of customers to be covered, network topology, and available bandwidth of the backbone network.

As will be described in greater detail subsequently, a Media Station has sufficient storage to store most frequently accessed programs and associated metadata. A subscriber's streaming request is sent to a Media Station. The Media Station will take appropriate actions and start the stream. Other requests from the subscriber such as trick-mode operations and EPG navigations are also sent to Media Station.

Media Stations interact with the Online Support Layer 114 to obtain subscriber information, content management information, billing related information, and EPG related information. They also interact with the Online Support Layer as well as other Media Stations to copy or move program data among the Media Stations and between a Media Station and the Data Center.

Each Media Station has a number of Media Engines 116. A Media Engine can be a blade in a chassis as will be described in greater detail subsequently. The Media Engine is responsible to streaming program data to the subscribers. The specific configuration of the Media Engine depends on the number of subscribers covered and the amount of program data stored in the Media Station.

A Media Director 118 is the control unit of a Media Station. All subscribers' initial streaming requests are sent to Media Director. In addition, the Media Director controls load balance, storage balance, and media data replication within the Media Station. In certain hardware applications as described in greater detail subsequently, one of the Media Engines will be used as a backup Media Director. It mirrors data from the Media Director during normal operation and takes over the role when the Media Director is out of service.

An Online Support layer 114 manages content information for the entire Media Switch system and controls the media data distribution among Media Stations. In exemplary embodiments, the Online Support layer also provides billing and subscriber management services to Media Stations and network management functions.

A Home Media Station 120 in the online support layer stores media data for all programs that are currently in service. A Content Engine 122 in this layer is the introduction point for media data into the system. The Content Engine obtains instructions from the Media Assets Management System (MAM) 124 in the back-office layer 126 and performs necessary encoding, trans-coding, or uploading from various sources such as digital video tapes, DVD, live TV, etc., stores this data in the Home Media Station and distributes it to the Media Stations in the media station layer.

A Customer Self-service system 128 is also incorporated into the online support layer, through which a customer can check account status, pay subscription fees, purchase service plans for special programs, register service requests, as well as configure EPG settings.

The back office layer 126 provides offline support operations and generation of control data for the other layers. The Media Assets Management (MAM) system 124 is used to keep track of and control the life cycle of each media program. It assigns a system-wide unique Program ID for each new media program, and generates work orders for the Media Acquisition Control module 128, which in turn interacts with a human operator to start and control the operation of Content Engine in the online support layer. A Billing System 130 and the Subscriber Management System 132 manage back-end databases, and support user interfaces for setting up billing policies and entering or modifying subscriber information.

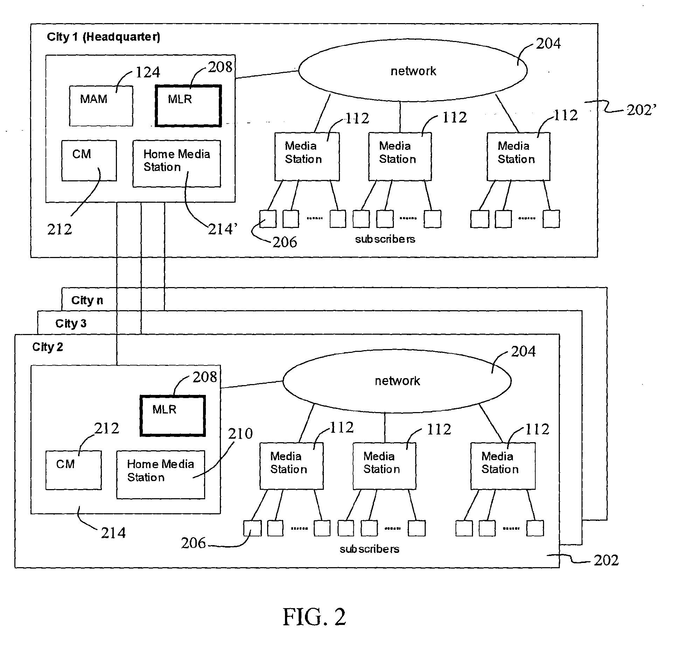

FIG. 2 demonstrates one embodiment of the multiple layers of the Media Switch configured for use in a number of geographical areas or cities 202 served. Each city employs a series of media stations 112 interconnected through the metropolitan area network (MAN) 204. Each media station serves a number of subscribers 206. Each subscriber has a fixed media station to serve its streaming requests. Additionally, each city incorporates on-line support layer elements including a media location registry (MLR) 208, a home media station 210 and a content manager 212 in a distribution center (DC) 214. For the embodiment shown, a principal city 202' is chosen as a headquarters site. Associated with that site is the MAM 124. In alternative embodiments, multiple cities incorporate a MAM for introduction of content into the system.

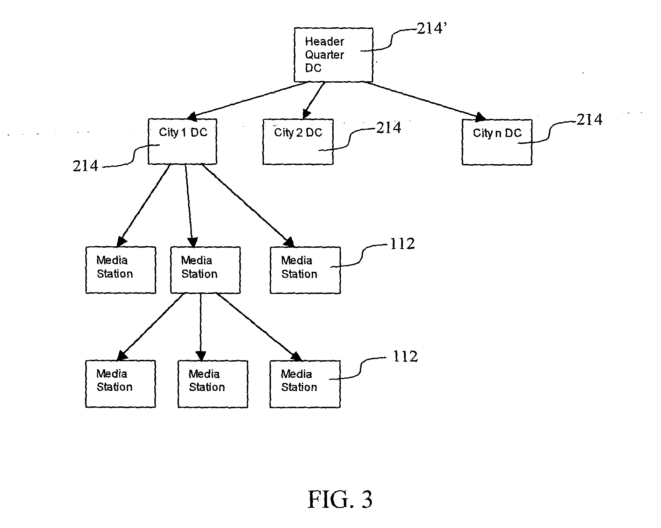

The MAM determines when and where to distribute a program. The CM publishes the program at the time specified by the MAM and the MLR identifies the location of the data for distribution. Logically, the resulting content distribution system is hierarchical as shown in FIG. 3. The Headquarters distribution center 214' provides content to the various city distribution centers 214. Each city DC then distributes the data to the media stations 112 in its control and media stations further distribute data to other media stations as will be described in greater detail subsequently.

As previously described, a media station is a self-sufficient streaming unit covering a set of subscribers. Media stations in a typical application are installed in a CO of a broadband network. The placement of media stations is determined according to the number of subscribers to be covered, network topology and available bandwidth of the network.

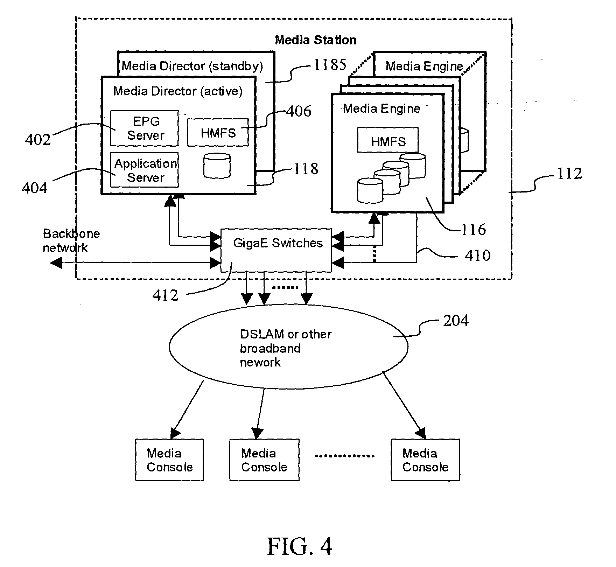

As shown in FIG. 4 for an exemplary embodiment, each media station 112 incorporates a media director 118 having an EPG server 402 and an application server 404 for handling streaming and trick requests from the subscriber. A Hyper Media File System (HMFS) 406 is incorporated for data storage. A standby media director 1185 with identical capabilities is provided to assume the role of the active director upon failure or removal from service. Multiple media engines are present in the media station. The media director records the location of all programs in the system and which media engine holds a particular program or portions of it. Upon communication from a subscriber media console, the media director directs the media console to the appropriate media engine to begin the data stream. A distributed storage subsystem (for the embodiment shown, a HMFS) 408 is present in the media engine to employ large number of independent, parallel, I/O channels 410 to meet massive storage size demands and I/O data rate demands. Media engines are connected together through a set of Gigabit Ethemet switch 412, and to the network 204 communicating with the subscribers. Matching bandwidth between the network to subscribers and I/O channels avoids any bottleneck in the streaming system.

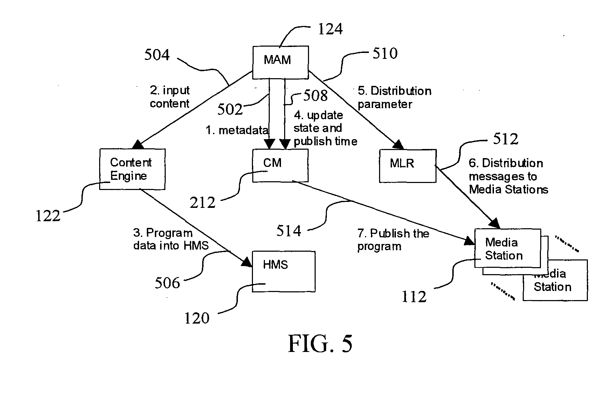

Each media program (a movie, a documentary, a TV program, a music clip, etc.) is partitioned into smaller segments. Such partition provides a small granularity for media data units and makes data movement, replications, staging and management much easier and more efficient. Distribution of the content to the media stations is accomplished as shown in FIG. 5.

A new program is loaded and distributed by the MAM transferring metadata 502 of the new program to Content Manager (CM) 212. The MAM then instructs Content Engine (CE) 122, by means of a work order 504, to transfer the program data 506 into Home Media Station (HMS) 120. The MAM updates the state of the program to "inactive" and specifies a publish time 508. The MAM sends distribution parameters 510 to the MLR to trigger the distribution of the program 512. The MLR starts the operation sequence to distribute contents to Media Stations 112 as will be described in greater detail subsequently. The CM sends the "publish" commands to all Media Stations at a specified time to start the service of the program 514.

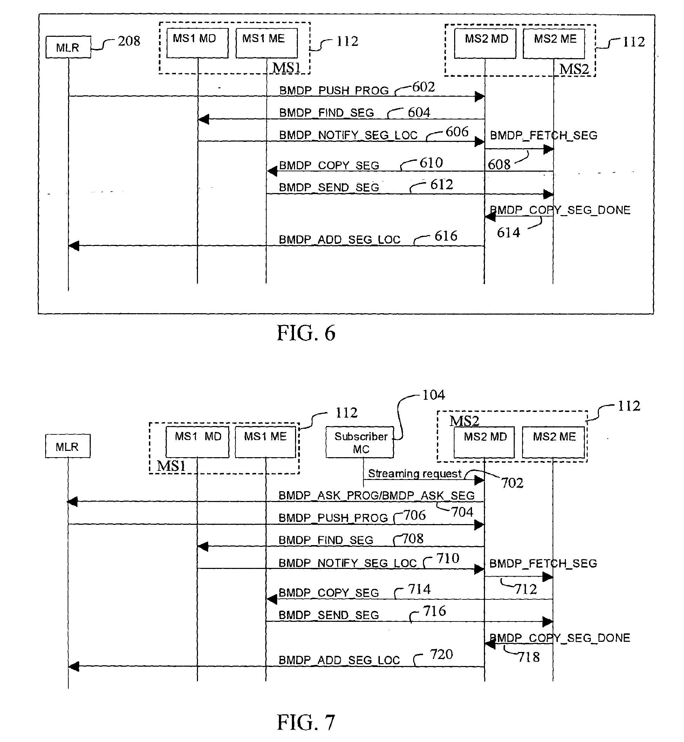

To provide content to the media stations to be available for subscriber access, content is "pushed" to the media stations as shown in FIG. 6. The MLR directs the media director MS2MD in a media station MS2 to obtain the program 602, identifying a media station MS1 where the content is present. Initially, the content will be present in the Home Media Station and subsequently in the logical hierarchy as previously described with respect to FIG. 3. The media director in the seeking media station MS2 will then request the location 604 of the needed segment from the media director MS1MD of the identified station. The identified MD will then notify 606 the seeking MD of the location of the segment in media engine MS1ME The seeking MD will then direct 608 an appropriate media engine MS2ME to fetch the segment from MS1ME. The MS2ME will request 610 a copy of the segment from MS1ME and MS1ME will respond 612, transferring the segment. When the copying of the segment is complete, MS2ME will notify MS2MD that the copying of the segment is complete 614. The media director then notifies 616 the MLR of the new location of the segment for addition to the location database.

The MLR can plan the push sequence from Media Station to Media Station so the push operation can be done in shortest time to all Media Stations. For example, the logical tree structure shown in FIG. 3 is employed by directing all Media Stations at the top level to get the segments from Home Media Station, and then directing the next level Media Stations to get the segments from their group leaders. For an exemplary embodiment, the first segment of all active programs is distributed to all media stations to simplify access for the subscribers.

For content which is not yet present on the media stations but published for distribution as shown in FIG. 5, a request from a subscriber results in transfer of the content as shown in FIG. 7. The subscriber media console 104 makes a streaming request 702 to the media director MS2 MD of the media station MS2. The MD asks 704 the MLR for the location of the program or segment requested. The MLR responds with a notification 706 of locations for the segment. Multiple locations may exist where the desired segment is stored. The MD calculates the relative cost of obtaining the desired copy of the segment based on a number of parameters including the bandwidth available, distance from the source media station, copying time and load of the source media station. Upon selection of a source media station, MS1 for the example herein, the MD requests 708 the location of the segment from MS1MD which responds 710 with the address of a media engine MS1ME storing the segment. MS2MD then directs 712 a selected media engine MS2ME to fetch the segment. MS2ME requests 714 a copy of the segment from source media engine MS1ME which responds 716 sending the segment. Upon completion of the copying of the segment, MS2ME notifies 718 the MD of completion of the copy and the MD notifies 720 the MLR of the new location of the segment.

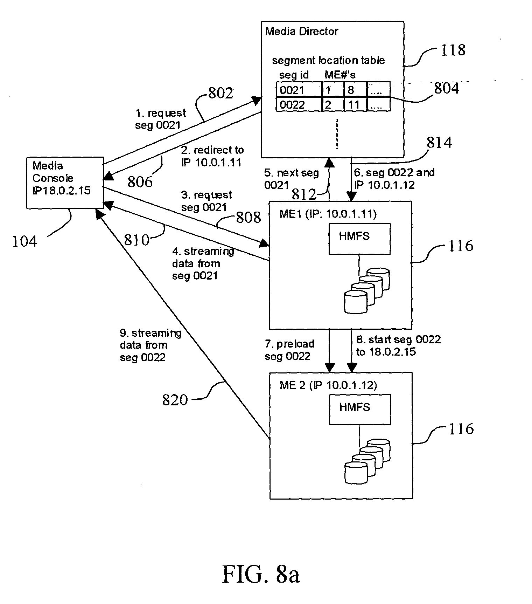

For streaming content to subscribers, the media director in each of the media stations employs a load balancing scheme to keep track of the task load of the media engines in the media station. Load balance is achieved by directing streaming requests according to current system states and load distribution. An example of the communications sequence for data transfer under the command of the media director is shown in FIG. 8a with representative IP address locations for the system elements. The media console 104 requests 802 a segment 0021 from the media director 118. The media director identifies the location of the segment in a segment location table 804 as present in media engines 1 and 8, (ME1 and ME8) and redirects 806 the MC to ME1's IP address 10.01.1.11. The MC then requests 808 segment 0021 from ME 1 which begins streaming data 810. When the segment being streamed nears its end, ME1 requests 812 the location of the next segment from the MD which locates the next segment and MEs storing that segment in the segment location table, selects an ME based on load and status and replies 814 with the identification of the next segment (seg 0022) and the IP address 10.0.1.12 of ME2 where the next segment resides. ME1 notifies ME2 to preload 816 the next segment seg 0022 and upon completion of the streaming of seg 0021 directs 818 ME2 to start streaming seg 0022 to IP address 18.0.2.15, the media console. ME2 then begins streaming 820 the data from seg 0022 to the MC.

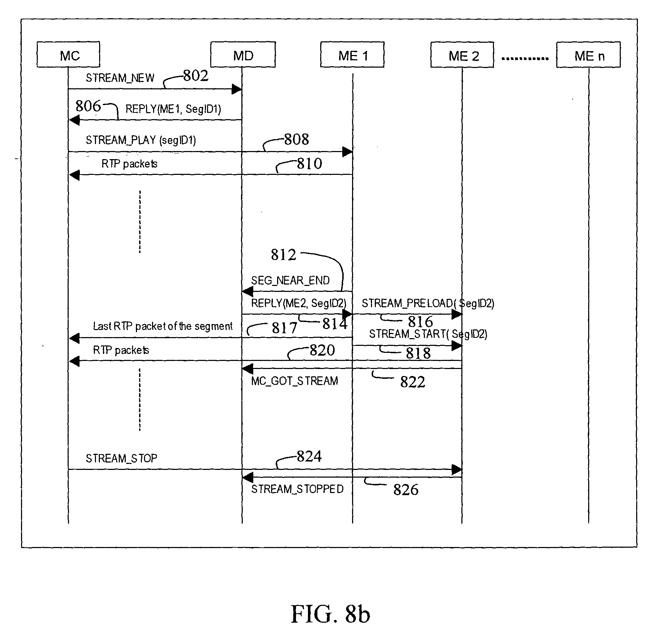

A flow diagram of the sequence described with respect to FIG. 8a is shown in FIG. 8b. Upon assumption of the communication of the stream with the MC by ME2, ME2 sends a notification 822 to the MD. The process described continues until the MC orders a cessation of streaming 824 by the ME at which time the ME notifies the MD the streaming has stopped 826.

As a portion of the load balancing scheme, a rapid replication scheme is used to copy a segment from one media engine to another. When a media engine exceeds its capacity of streaming, a highly demanded segment can be replicated to another media engine and further requests for that segment are directed to the new media engine. The extra delay observed by the streaming request that triggered the replication is less than 30 milliseconds in exemplary embodiments.

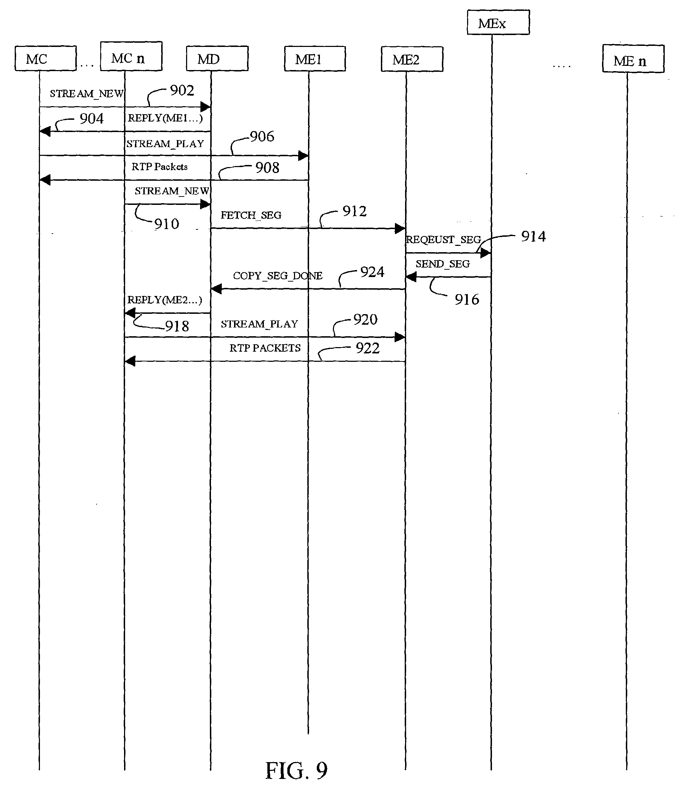

The communications sequence is shown in FIG. 9. A first media console MC1 requests streaming 902 of a segment to the Media director MD. The MD replies 904 with a redirection to a media engine ME1 storing the segment. MC1 requests playing of the stream 906 from ME1 and ME1 responds 908 by streaming the RTP packets of data from the segment. The MD has cataloged the redirection to ME1 and monitors ME1's load. If ME1 has reached a predetermined maximum capacity, when another media console MEn requests streaming 910 of the same segment, if the segment is not present on another available ME in the segment location table, the MD directs 912 another media engine ME2 to fetch the segment and specifies the ME from which the segment is to be replicated. In various embodiments the maximum capacity may be determined such that the replication can occur from the first media engine or other existing media engines in the segment location table. Alternatively, the fetch command may direct copying of the segment from a media engine in another media station as described with respect to FIG. 7. For purposes of the example, the source media engine defined by the MD is designated MEx. ME2 requests a copy 914 of the segment from MEx which replies by sending the segment 916. Upon direction of the fetch, the MD replies 918 to MCn redirecting to the IP address of ME2. MCn then requests playing of the stream 920 and ME2 responds 922 forwarding RTP packets for the segment to MCn. When copying of the segment from MEx to ME2 is complete, ME2 sends a copy done 924 to the MD which notifies the MLR of the new location for the segment as previously described.

A stream swapping method is used to exchange two streams of the same segment, one on a first media engine ME2 that has a complete copy of the segment and a second on a second media engine ME1 which is currently receiving the same segment. Where the subscriber attempts a fast-forward while streaming from ME1 with the incomplete segment, the media director swaps the fast-forwarding stream from ME1 to ME2 (with the complete segment). The stream using the same segment running at normal rate is swapped from the first media engine to the second media engine thereby avoiding a failure of the fast forwarding operation.

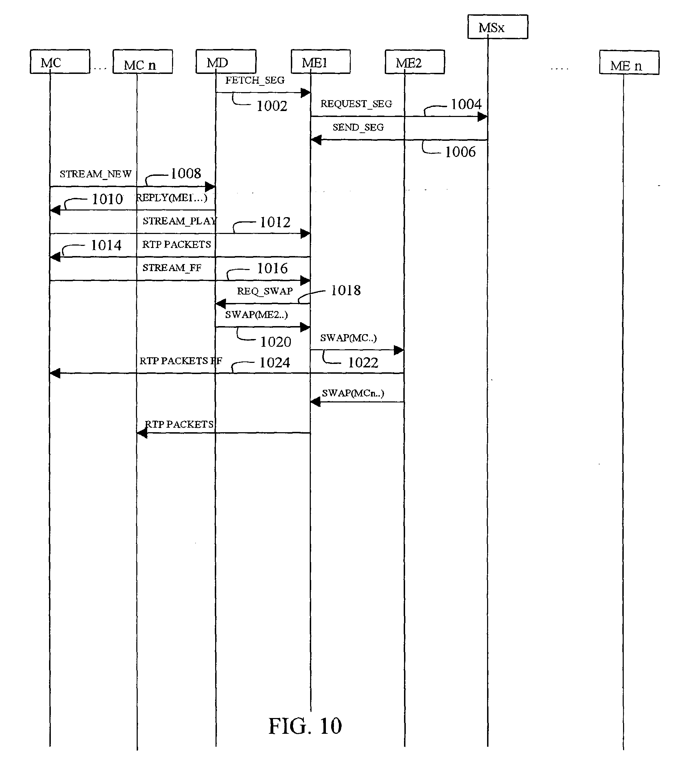

FIG. 10 demonstrates the communications sequence for swapping media engines. During normal operation, the media director MD has directed ME1 to fetch 1002 a particular segment. ME1 requests a copy 1004 of the segment from the source ME (arbitrarily identified as MEx) and MEx responds by sending 1006 the desired segment. During receipt of the segment, a media console MC1 requests a stream 1008 from the MD which replies 1010 redirecting the MC to ME1. MC1 requests playing of the stream 1012 and ME1 responds 1014 by sending the RTP packets from the requested segment. If MC1 requests a fast forward 1016 of the stream (segment) ME1 identifies the potential for a streaming error if the fast forward exceeds the portion of the segment which has been received from MEx. ME1 notifies 1018 the MD of the impending error state and the MD replies with the identification of a media engine ME2 (which can be MEx itself) having the entire segment that is idle or has started streaming after ME1. ME2 has been streaming RTP packets 1020 of the segment to another media console MCn. ME1 requests a swap 1022 identifying MC1 as the media console in current communication and providing the segment number and frame within the segment. ME 2 begins streaming of data 1024 from the segment to MC and, if ME2 has been streaming, returns a swap 1026 identifying media console MCn and the frame of the segment. ME1 takes over streaming of RTP packets 1028 to MCn.

The media engines in the media station are symmetrical with respect to input and output thereby allowing data to be taken into the media engine substantially as rapidly as streaming data is sent out. Therefore, the media station can be used as a high bit rate, massive storage repository. This architecture is specifically beneficial in live broadcast transmission where the program segments are transferred to the media stations in real time and streamed to the media consoles. Details of an embodiment of the media stations employed in the present invention are disclosed in copending patent application Attorney Docket No. U001 100085 entitled METHOD AND APPARATUS FOR A LOOSELY COUPLED, SCALABLE DISTRIBUTED MULTIMEDIA STREAMING SYSTEM having a common assignee with the present application, the disclosure of which is incorporated by reference as though fully set forth herein.

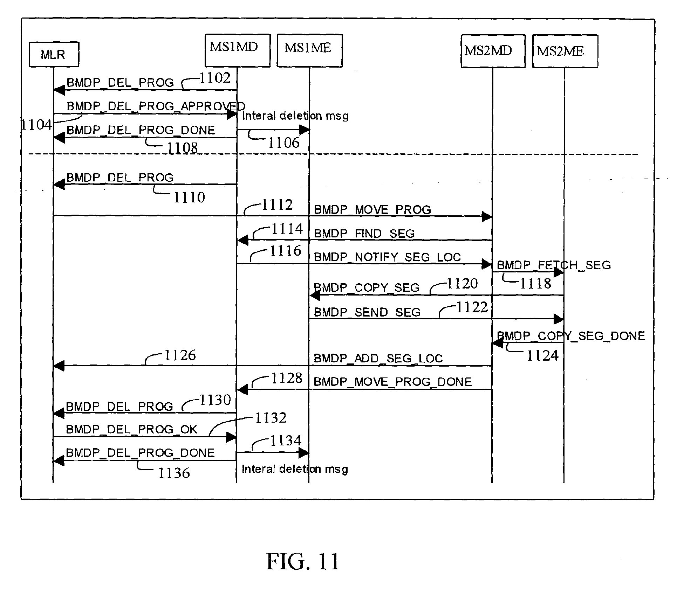

In addition to acquiring program segments, segments which are not requested from a media station will age out and be removed. FIG. 11 provides an exemplary communication flow for removal of an unused program/segment. Upon determination that a program has timed out or additional storage space is necessary for higher usage programs, the media director MS1MD requests deletion of the program 1102 to the media location registry MLR. MLR responds with an approval of the program deletion 1104 and the MD generates and internal deletion message 1106 to the media engine(s) MS1ME in the station which the segment location table indicates have the segments associated with the program. The media director then sends a message 1108 to the MLR confirming the deletion for the MLR to update the location database.

In certain instances, it is desirable to retain one copy of a program being deleted by media stations for storage reasons. This instance is also shown in FIG. 11 where media station 1 is deleting a program to free up storage but the MLR determines that saving the program is desirable and directs transfer of the program to a media station having surplus storage availability. MS1MD requests deletion of a program 1110 to the MLR. The MLR directs a program move 1112 to the media director MS2MD in a second media station, identifying the media station currently requesting the deletion. MS2MD queries MS1MD to find the segment(s) 1114 associated with the program and MS1MD responds 1116 with the segment location(s). MS2MD directs a media engine MS2ME to fetch the segment(s) 1118. MS2ME sends a copy request 1120 to MS1ME which responds by sending the segment(s) 1122. MS2ME notifies 1124 MS2MD when copying of the segment(s) is complete and MS2MD notifies 1126 the MLR of the new segment location. This process is repeated until all segments of the program are transferred at which time MS2MD notifies MS1MD that the move has been completed 1128. MS1MD then again requests deletion of the program 1130 from the MLR which responds with an approval 1132 MS1MD then sends internal deletion messages 1134 to MS1ME to delete the program segments and notifies the MLR that the program deletion is complete 1136 for updating the location database.

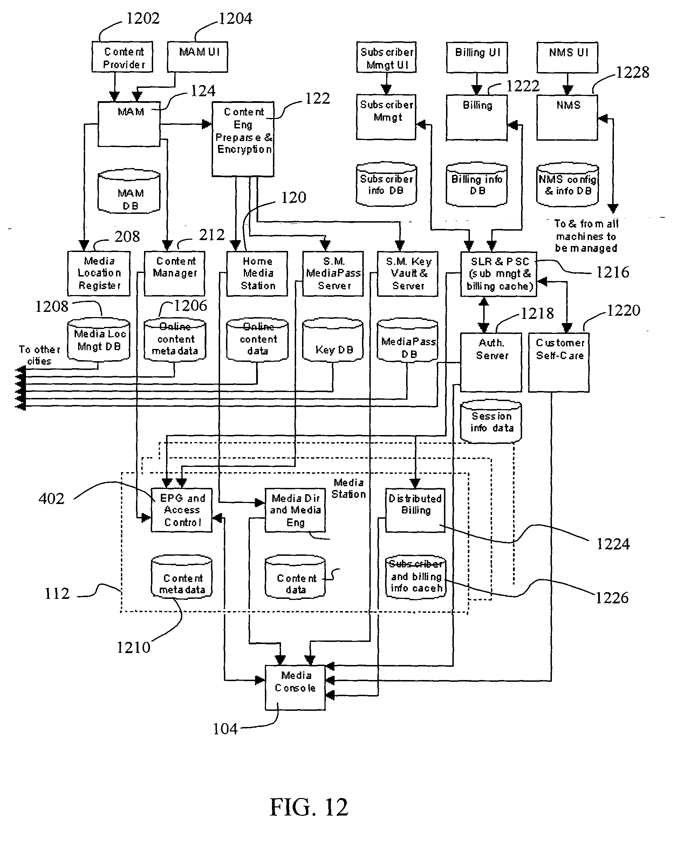

High level data flow for the overall media switch is shown in FIG. 12. Original content is made available by a content provider 1202. The controller uses the MAM User Interface (UI) 1204 to direct the MAM to interface with the content provider to receive the content. Under control of the MAM, the content engine 122 preparses and encrypts the program in segments and distributes the content to the Home media station 120 and the content manager 212 stores the metadata for the content in a database 1206. The location of the content is stored by the media location registry 208 in the media location management database 1208. The content manager provides the content metadata to the EPG and Access control elements 402 of each media station 112 for storage in their database 1210 as previously described. The Home media station transfers data to the media engines in the media station under the control of the media director for storage as previously described.

The subscriber management system 1212 maintains data on subscribers in a subscriber database 1214 and communicates through a cache 1216 with an authentication server 1218 and a customer self care system 1220. The authentication server communicates with the subscriber's media console 104 as the first step in data streaming. When a subscriber selects a program to be obtained by using the EPG functions in the media console, a request is made from the media console to the authentication server which authenticates the subscriber and provides service tokens. The service tokens are then passed by the media console to the access control function of the media station. The media director then provides the program segments to the media console through the media engine as previously described.

An integrated billing system 1222 operates similarly through the cache 1216 providing billing data to a distributed billing function 1224 within the media stations, each having a subscriber and billing cache 1226 for data storage. Billing information is then transmitted to the media console for the subscriber.

The customer self care system is also accessible by the subscriber through the media console. The customer self care system communicates through the cache to the billing and subscriber management systems.

A network management system (NMS) 1228 enables control of the hardware elements of the entire system. An exemplary NMS would be UTStarcom's MediaSwitch NMS.

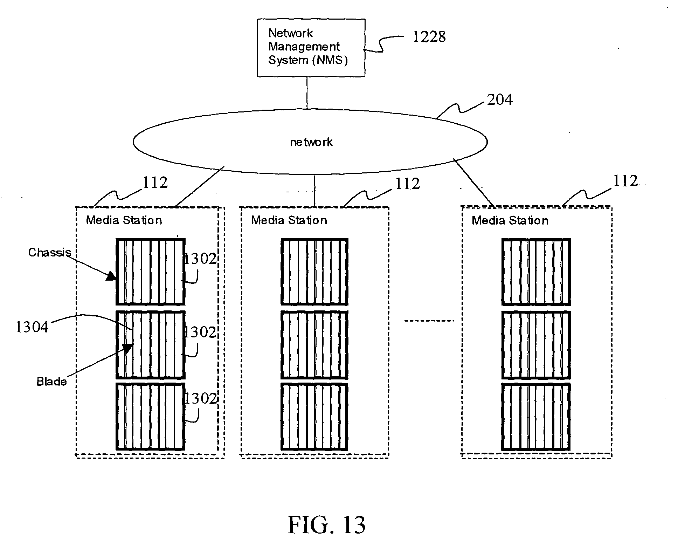

From a hardware standpoint in a representative embodiment, the Media Switch system is hierarchical with four tiers; the entire system as represented in FIGs. 2 and 12, as previously described, the Media Station, the chassis, and individual blades. From the top level as shown in FIG. 13, the Network Management System (NMS) 1228 in a central location covers a city, a country, or even multiple countries. The second tier is the Media Station (MS) 112, a self-contained streaming unit typically located in a CO and covering the vicinity of the CO. Each MS consists of a number of chassis 1302, the third level of management. The chassis management system provides external control for the blades in the chassis. The blade 1304 is the lowest level management unit. Each blade is an independent computer. It can be either a Media Engine (ME) or a Media Director (MD).

In the embodiment shown, the Media Station is a level of abstraction, with its state represented by its MD. Therefore, the MS is not an entity in the management structure and a three-tier management system is employed.

Network management is the first level and provides a full set of management functionalities and GUI. System load and other operational parameters such as temperature and fan speed are monitored. Automatic alarms can be configured to send email or call to the system operator.

Chassis management is the second level and provides blade presence detection, automatic blade power up, remote blade power up and power down, managed blade power up to avoid current surge during disk drive spin up, chassis id reading and chassis control fail-over.

Blade self-management and monitoring is the third level and allows temperature, fan speed, and power supply voltage monitoring and alarm through SNMP to the NMS, self-health monitoring including critical threads monitoring, storage level monitoring, load monitoring, etc. All alarm thresholds can be set remotely by NMS. For software related failures, software restart or OS reboot will be attempted automatically, and the event will be reported to NMS

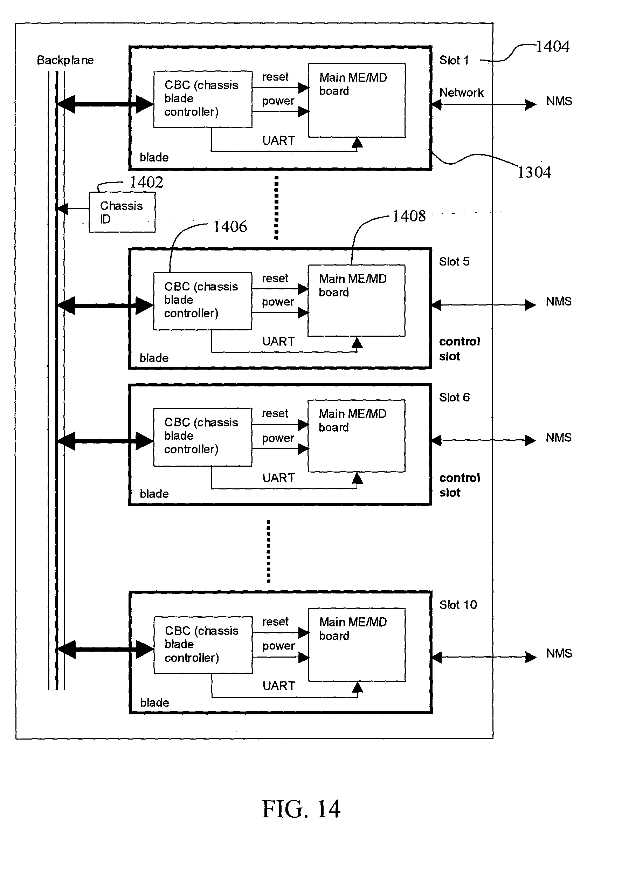

As shown in FIG. 14 for the exemplary embodiment, a chassis can host up to 10 blades1304, each can be a Media Engine or a Media Director. Each blade can read the chassis ID 1402 and its own slot number 1404 for identification.

All blades in a chassis are equipped with a control unit or Chassis Blade Controller (CBC) 1406. For the exemplary embodiment, each CBC consists of an Intel 8501 chip implementing the control logic and an FPGA configured to act as the control target. The 8501 chip also communicates with the main board 1408 through a UART interface 1410. The main board can issue control commands or relay control commands received from NMS through the network to the CBC.

For the exemplary embodiment, blades located in slot 5 and 6 are the control blades. One active and one standby determined by the arbitration logic at power up. When the chassis is being powered up, the blades in slots 5 and slot 6 arbitrate and one becomes the active controller. The CBC on the active control blade scans the back-plane and powers up the blades in a controlled sequence with a pre-determined interval to avoid current surge caused by disk drive spin up on the individual blades.

The CBC on the active control blade then scans all slots on the backplane and detects the presence and status of each blade. The standby control blade monitors the status of the active control blade. When the active control blade gives up the control, the standby automatically takes over and become the active control blade.

During normal operation, the CBC on the active control blade periodically scans the backplane. If a new blade is plugged in, it will be automatically powered up.

The active control blade register itself with NMS, and can take commands from NMS for controlling other blades in the chassis, such as checking their presence and status, power up/down or power cycle a blade, etc. The non-controlling blades also register themselves to NMS and can take commands from NMS to reboot or power down.

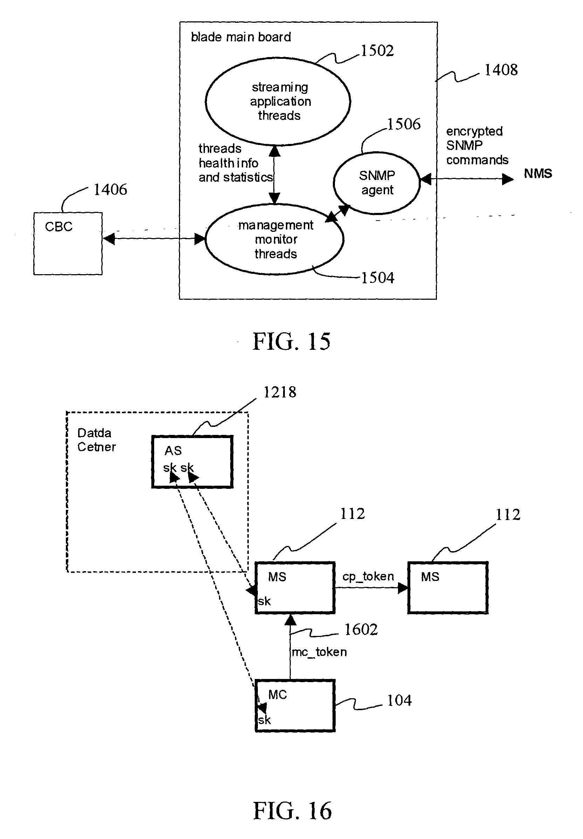

From the management point of view, each blade is a standalone computer. Besides its application functionalities, each blade has management software to monitor the health of the application software, system load and performance, as well as hardware related parameters such as CPU temperature, fan speed, and power supply voltage. The blade management software functionality is shown in FIG. 15.

The streaming application threads 1502 put their health and load information into a shared memory area periodically. The management monitor thread 1504 scans the area to analyze the status of the threads and the system. In addition to periodically reporting the state information to NMS through a SNMP agent 1506, appropriate actions as known in the art are taken when an abnormal state is detected.

As previously described, a service token based authentication scheme is employed as the precursor for any data transfer requested by a subscriber's media console. FIG. 16 shows the access control schemes, where "sk" indicates a secrete key. Secret keys are established only between a system component, such as the media console 104 or the media station 112, and Authentication Server 1218. All other accesses among the system components are controlled by Kerberose style tokens granted by the Authentication Server. This reduces the number of secret keys distributed among the components, and makes adding new components simpler. An mc_token 1602 is passed by the media console to the media station to obtain streaming services. A cp_token 1604 is passed by a media station for data transfer between media stations.

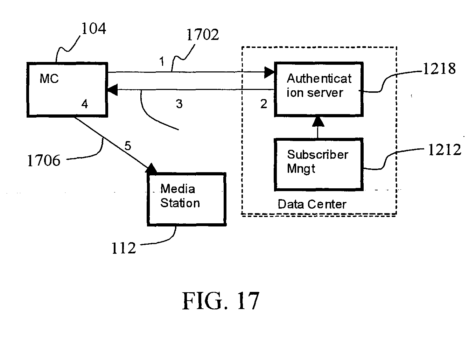

A media console possesses two numbers, MC_ID and MC_Key. Those numbers can be either burned into a chip in the box, be on a Smartcard, or be on some form of non-voltile memory in the box. When a subscriber signs up for the service, the Subscriber Management system records the numbers and associates them with the user account. MC_ID and MC_Key will be subsequently passed to the Authentication Server. FIG. 17 depicts the process of authentication.

A media console 104 when it powers up, after obtaining IP, sends an authentication request 1702 [which for the embodiment disclosed comprises MC_ID, {MC_ID, MC_IP, Other info, salt, checksum}_MC_Key] to the Authentication Server 1218. Note: {*x*}_*k* denotes that the message *x* is encrypted by *k.*

The Authentication Server finds the record of the media console using MC_ID, decrypts the message, and generates a session key, MC_SK, and an access_token for the media console. For an exemplary embodiment access_token = {MC_SK, service code, timestamp, checksum} _MS_SK, where MS_SK is a secret key established previously between the authentication servier and the media station that serves the media console; "service code" indicates what services the token can be used for. The Authentication Server calculates the "seed key" for MC_SK. The Authentication Server replies 1704 to the media console with [{access_token, MS_IP, salt, checksum}_MC_Key]. The MC decrypts the message with MC_Key and obtains mc_token and the IP address of the Media Director that it should contact. The mc_token will be kept until the media console shuts down, or the Authentication Server sends a new one. The media console sends 1706 mc_token to the application Server in the media station when requesting a media program, or the EPG server for browsing the EPG.

Having now described the invention in detail as required by the patent statutes, those skilled in the art will recognize modifications and substitutions to the specific embodiments disclosed herein.

## Claims

1. A media content distribution system for distributed multimedia streaming comprising:
a communications network;
a plurality of independent media stations communicating with the network, each having a media director and a second plurality of media engines, each media engine having
means for storing media content,
means for retrieving media content over the network and
means for streaming media content over the network,
the media director having
means for directing retrieval over the network of media content by a selected media engine,
means for tracking content stored on the media engines and
means for redirecting a content request from a media console connected to
the network to a selected one of the media engines storing content corresponding to the request for streaming;
at least one distribution center communicating over the network and having
a media location registry communicating with the media director in each media station, the media location registry storing the location of all media content in the media stations, and
means for downloading content to be presented.

2. A media content distribution system for distributed multimedia streaming as defined in claim 1 wherein the means for downloading content comprises:
a content manager for providing program information to the media stations;
a content engine for downloading content from selected providers; and
a home media station for storing all content downloaded by the content engine.

3. A media content distribution system for distributed multimedia streaming as defined in claim 1 or 2 further comprising a third plurality of distribution centers, a portion of the plurality of media stations communicating with each of the distribution centers and wherein one of the distribution centers comprises a headquarters distribution center, the headquarters distribution center having a media asset management system communicating with the content manager in each distribution center for controlling downloading of content to the associated home media station.

4. A media content distribution system for distributed multimedia streaming as defined in claim 1, 2 or 3 wherein the means for storing content incorporates multiple independent I/O channels for simultaneous input and output.

5. A media content distribution system for distributed multimedia streaming as defined in any one of claims 1 to 4 further comprising an authentication server communicating through the network for distribution of tokens to the media console.

6. A media content distribution system for distributed multimedia streaming as defined in any one of claims 1 to 5 further comprising a subscriber management system and a subscriber billing system communicating through a cache to the network to the media stations for subscriber and billing information.

7. A media content distribution system for distributed multimedia streaming as defined in any one of claims 1 to 6 wherein the media station comprises a chassis having a plurality of blades, a first blade functioning as the media director and a plurality of blades functioning as media engines.

8. A media content distribution system for distributed multimedia streaming as defined in claim 7 wherein each blade has direct communication with the network through a communications agent and the system further comprises a network management system for all components in the system.

9. A media content distribution system for distributed multimedia streaming as defined in claim 7 wherein each blade includes a chassis blade controller for communication through the chassis backplane in the media station and a main board for media engine and media director functions.

10. A method for distributed media streaming over a media content distribution system comprising the steps of:
providing a communications network;
connecting a plurality of independent media stations to the network, each having a media director and a second plurality of media engines;
providing at least one distribution center communicating over the network and having a media location registry;
downloading content to be presented;
communicating from the media location registry to a media director in each media station the downloaded content to be distributed;
directing through media directors in the media stations independent retrieval over the network of downloaded content by at least one selected media engine;
storing the media content on the selected media engine;
tracking content stored on the media engines in the respective media director;
storing the location of all media content in the media stations in the media location registry;
redirecting a content request from a media console connected to a media station through the network to a selected one of the media engines storing content corresponding to the request for streaming;
streaming media content over the network from the selected media engine to the media console.

11. A method as defined in claim 10 wherein the step of downloading content comprises the steps of:
transferring metadata of a program to a content manager;
instructing a content engine to transfer the program data into a Home Media Station;
updating the state of the program to "inactive" and specifying a publish time to the content manager;
sending distribution parameters to the media location register;
distributing the program;
sending a "publish" command to all media stations at the publish time to start the service of the program.

12. A method as defined in claim 11 wherein distributing the program comprises the steps of:
directing the media director in a seeking media station to obtain the program including identifying a source media station where the content is present;
requesting from the media director of the source media station the location of the needed segment;
notifying the seeking media director of the location of the segment in selected media engine;
directing by the seeking media director a receiving media engine in the seeking media station to fetch the segment from the selected media engine;
requesting by the receiving media engine a copy of the segment from the selected media engine;
transferring the segment from the selected media engine to the receiving media engine;
notifying the seeking media director that the copying of the segment is complete; and,
notifying the media location register of the new location of the segment for addition to the location database.

13. A method as defined in claim 12 wherein the source media station is a home media station in the distribution center.

14. A method as defined in claim 11, 12 or 13 wherein content requested by the media console is not present on the media station and comprising the steps of:
receiving a streaming request through the media director;
querying the media location registry for the location of the program or segment requested;
responding from the media location registry with source media station locations for the segment;
selecting a source media station by the media director;
requesting the location of the segment from a media director in the source media station;
responding with the address of a source media engine having the segment;
directing a selected target media engine to fetch the segment;
requesting by the target media engine a copy of the segment from source media engine;
sending the segment to the target media engine;
notifying the media director of completion of the copy and
notifying the media location register of the new location of the segment.

15. A method as defined in claim 14 wherein the step of selecting a source media station further comprises the steps of:
identifying multiple locations where the desired segment is stored;
calculating the relative cost of obtaining the desired copy of the segment based on predetermined parameters including the bandwidth available, distance from the source media station, copying time and load of the source media station.

16. A method as defined in any one of claims 10 to 15 wherein the steps of redirecting a content request and streaming media content comprise the steps of:
receiving a request for a first segment by the media director from the media console;
identifying the location of the first segment in a segment location table;
redirecting the media console to the IP address of a first media engine;
requesting the first segment from the first media engine;
streaming data from the first media engine;
detecting the segment being streamed as near its end;
requesting the location of the next segment from the Media director;
locating the next segment in the segment location table;
replying with the identification of the next segment and the IP address of a second media engine where the next segment resides;
notifying the second media engine to preload the next segment;
upon completion of the streaming of the first segment, directing the second media engine to start streaming the next segment to the IP address of the media console;
streaming the data of the next segment from the second media engine to the media console;
upon assumption of the communication of the stream with the Media console by the second media station, notifying the media director.

17. A method as defined in claim 16 wherein the steps of detecting the segment being near its end through notifying the media director are repeated until the media console orders a cessation of streaming by the media engine at which time the media engine notifies the media director that the streaming has stopped.

18. A method as defined in claim 16 or 17 wherein the segment location table identifies a plurality of media engines in which the segment is stored and in which the step of identifying the location includes the step of selecting a media engine based on load and status.

19. A method as defined in claim 16, 17 or 18 wherein the first media engine has reached a predetermined maximum capacity when a second media console requests streaming of the same segment further comprising the steps of:
directing a third media engine to fetch the segment, specifying a fourth media engine from which the segment is to be replicated;
requesting a copy by the third media engine of the segment from the fourth media engine;
sending the segment from the fourth media engine;.
replying to the second media console redirecting to the IP address of the third media engine;
requesting by the second media console of playing of the stream; and,
responding by the third media engine forwarding data for the segment to the second media console.

20. A method as defined in claim 19 further comprising the steps of:
sending a copy done from the third media engine to the MD when copying of the segment from the fourth media engine to the second media engine is complete; and,
notifying the MLR of the new location for the segment.

21. A method as defined in any one of claims 16 to 20 wherein the media director has directed the first media engine to fetch the first segment and wherein the step of redirecting occurs during receipt of the segment and the step of streaming data from the first media engine further comprising the steps of:
receiving a fast forward request of the stream from the media console;
identifying the potential for a streaming error if the fast forward exceeds the portion of the segment which has been received by the media engine;
notifying the media director of the impending error state;
replying to the media engine with the identification of a third media engine having the entire segment;
requesting of the third media engine a swap identifying the media console in current communication; and,
streaming of data by the third media engine from the segment to media console.

22. A method as defined in claim 21 wherein the third media engine has also been streaming further comprising the steps of;
returning from the third media engine a swap identifying a second media console in communication; and,
streaming of data by the first media engine to the second media console.

23. A method as defined in any one of claims 12 to 22 wherein segments associated with a program have been identified as unneeded further comprising the steps of:
requesting by the media director of deletion of the program to the media location registry;
responding from the media location registry with an approval of the program deletion;
generating an internal deletion message to a media engine having the segments associated with the program;
sending a message to the MLR confirming the deletion; and,
updating the location database.

24. A method as defined in claim 23 wherein the deletion request has come from a first media station and the step of responding further comprising the steps of:
determining that saving the program is desirable;
directing transfer of the program to a second media station having surplus storage availability;
directing a program move to a second media director identifying the first media station currently requesting the deletion;
querying by the second media director of the first station media director to find the segments associated with the program;
responding from the media director with the segment locations on a first station media engine;
directing through the second media director a second station media engine to fetch the segments;
sending a copy request from the second station media engine to the first station media engine;
sending the segments from the first station media engine to the second station media engine;
notifying the second media director when copying of the segments is complete; notifying the MLR of the new segment locations; and,
requesting deletion of the program by the media director from the MLR.

25. A method as defined in any one of claims 10 to 24 further comprising prior to the step of redirecting the steps of:
requesting by the media console of a security token from a security authentication server on the network;
confirmation of subscriber authentication for the media console; and,
issuing the security token based on the subscriber authentication;
and the step of redirecting further includes the steps of:
receiving the security token from the media console;
confirming the security token with respect to the streaming request.

26. A method as defined in any one of claims 12 to 25 further comprising the steps of:
authenticating each media engine by an authentication server;
supplying a second security token to each authenticated media engine;
and wherein the step of requesting a copy of the segment includes
receiving the second security token from the receiving media engine.

27. A method as defined in any one of claims 14 to 26 further comprising the steps of:
authenticating each media engine by an authentication server;
supplying a second security token to each authenticated media engine;
and wherein the step of requesting a copy of the segment includes
receiving the second security token from the target media engine.
